Europäisches Patentamt

European Patent Office

Office européen des brevets

(11) Veröffentlichungsnummer: **0 229 281**
**B1**

(12) **EUROPÄISCHE PATENTSCHRIFT**

(45) Veröffentlichungstag der Patentschrift: **09.01.91**

(51) Int. Cl.⁵: **G 09 F 13/10** // G02B27/02

(21) Anmeldenummer: **86116631.2**

(22) Anmeldetag: **29.11.86**

(54) **Leuchtkasten für Diapositive.**

(30) Priorität: **11.01.86 DE 3600588**

(43) Veröffentlichungstag der Anmeldung:
**22.07.87 Patentblatt 87/30**

(45) Bekanntmachung des Hinweises auf die
Patenterteilung:
**09.01.91 Patentblatt 91/02**

(84) Benannte Vertragsstaaten:
**AT BE CH DE ES FR GB IT LI NL SE**

(56) Entgegenhaltungen:
**EP-A-0 016 589**
**FR-A-2 293 019**
**FR-A-2 376 431**
**GB-A-2 050 665**
**US-A-1 513 151**
**US-A-4 185 407**

(73) Patentinhaber: **Hinrichs Fotowerbung GmbH +
Co. KG
Raiffeisenstrasse 21
D-4504 Georgsmarienhütte (DE)**

(72) Erfinder: **Hinrichs, Peter
Fliederkamp 10
D-4500 Osnabrück (DE)**

(74) Vertreter: **Busse & Busse Patentanwälte
Postfach 1226 Grosshandelsring 6
D-4500 Osnabrück (DE)**

Courier Press, Leamington Spa, England.

**Beschreibung**

Die Erfindung bezieht sich auf einen Leuchtkasten für Transparentvorlagen, insbesondere Diapositive, mit zumindest einem vorderseitigen Paar transparenter Trägerscheiben, die zwischen sich die Transparentvorlage aufnehmen, sowie einer im Kasteninnern zur Belichtung der Transparentvorlage angeordneten Lichtquelle.

Leuchtkästen der vorgenannten Art sind bekannt und finden z. B. bei der Präsentation von Waren in Schnellrestaurants, Supermärkten und dgl. Anwendung. Das zu belichtende Diapositiv hat dabei oftmals neben der Darstellung von zum Verkauf stehenden Waren Informationen über Preis, Produktbezeichnung und dgl. zu enthalten. Diese Informationsangaben sind überlicherweise auf fotografischem Wege in das zu belichtende Diapositiv eingearbeitet, so daß im Falle einer z. B. durch eine Preiserhöhung bedingten Änderung der Informationsangabe das gesamte Diapositiv gegen ein neu herzustellendes Dia auszutauschen ist. Dies verursacht einen nicht unerheblichen Kostenaufwand und steht einer möglichst flexiblen Preisgestaltung der zum Verkauf stehenden Waren entgegen.

Die US—A—4 185 407 offenbart eine Leuchtkastenvorrichtung, die als Ausleuchteinrichtung für Theken dienen soll und zwei lageveränderlich zueinander anzuordnende Trägerscheiben umfaßt. Beide Trägerscheiben sind mit Lageabstand zueinander angeordnet, um in dem dadurch gebildeten Zwischenraum Sichtvorlagen z. B. in Gestalt eines Diabildes oder Probenstücke enthaltende Disten für einen außenstehenden Betrachter sichtbar zu machen, wobei eine Belichtung vom Kasteninneren her jedoch nicht erfolgt.

Die GB—A—2 050 665 offenbart eine Trägerplatte, auf der mittels Haftstreifen auswechselbar Einzelinformationsträger zu haltern sind. Da hier die Einzelinformationsträger nicht in einem Raum zwischen einem vorderseitigen Paar transparenter Trägerscheiben anzuordnen sind und damit in dieser Druckschrift kein Leuchtkasten der eingangs genannten Art angesprochen ist, stellt sich bei dieser Vorrichtung nicht die Problematik im Falle einer Änderung der Informationen des Informationsträgers.

Auch die FR—A—2 293 019 beschreibt eine Trägerplatte, auf der Informationen tragende weitere Informationsträger auswechselbar durch Aufschieben auf ein Halterungsteil angeordnet werden können.

Die EP—A—0 016 589 schließlich offenbart eine Display-Vorrichtung, bei der ober- und unterhalb eines von hinten zu belichtenden Diapositivs in Taschen auswechselbar nageordnete Informationsangaben, nicht jedoch Informationsangaben im Diapositiv selbst verändert werden können.

Der Erfindung liegt daher die Aufgabe zugrunde, einen Leuchtkasten der eingangs genannten Art dahingehend zu verbessern, daß in der Transparentvorlage vorzusehende Informationsangaben auf einfache Weise geändert werden können.

Zur Lösung dieser Aufgabe zeichnet sich der Leuchtkasten der eingangs genannten Art dadurch aus, daß die Transparentvorlage ein oder mehrere Sichtfenster aufweist, hinter dem oder denen eine oder mehrere weitere Informationen tragende Transparentvorlagen auswechselbar angeordnet sind und zumindest eine der Trägerscheiben mit einer von außen nicht sichtbaren Halterung für zumindest die weiteren Transparentvorlagen versehen ist.

Das Sichtfenster kann sowohl durch eine in der Transparentvorlage vorgesehene Aussparung und somit als Leerfläche, als auch durch eine transparentvorlagenseitige durchsichtige Fläche gebildet sein.

Im Regelfall enthält die Transparentvorlage keine eigenen Informationsangaben, sondern beispielsweise lediglich die nicht zu ändernde bildliche Darstellung der Ware. Die Informationsangaben wie z. B. Preis und Warenbezeichnung sind auf den wieteren Informationsträgern enthalten, die vom Benutzer im Bedarfsfall schnell und einfach ausgewechselt und für Änderungen auf Vorrat gehalten werden können. Eine neue Herstellung der Transparentvorlage ist damnach entbehrlich.

Weitere Einzelheiten und Vorteile der Erfindung ergeben sich aus den Unteransprüchen, der Zeichnung und der nachfolgenden Beschreibung. Die Zeichnung zeigt:

Fig. 1 in schematischer Darstellung ein in einem erfindungsgemäßen Leuchtkasten angeordnetes Diapositiv mit Preisauszeichnungsfolien;

Fig. 2a)—2f) Ausführungsbeispiele von Halterungen der Diapositive und Transparentvorlagen in jeweils abgebrochener Querschnittsdarstellung;

Fig. 3 eine vergrößerte Teilvorderanschicht des Ausführungsbeispiels nach Fig. 2e) entsprechend der Linie III-III in Fig. 2e);

Fig. 4 eine perspektivische Darstellung eines mit einer oberseitigen Falzung und unterseitig aufgeklebten Haltetasche versehenen Diapositivs;

Fig. 5 eine Querschnittsdarstellung nach der Schnittlinie V-V des in Fig. 4 gezeigten Diapositivs;

Fig. 6 eine schematiche Vorderansicht eines Leuchtkastens nach der Erfindung mit insegesamt acht Bildmotiven.

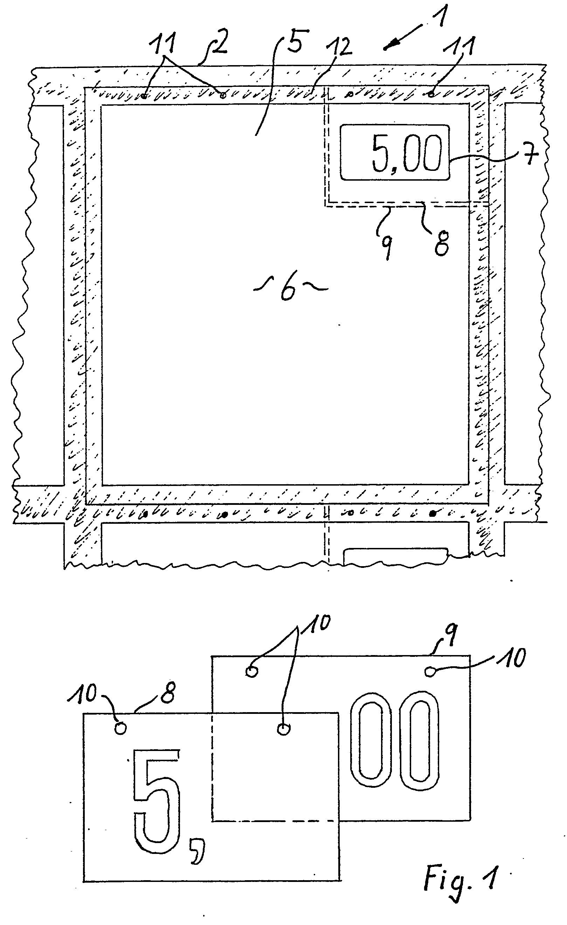

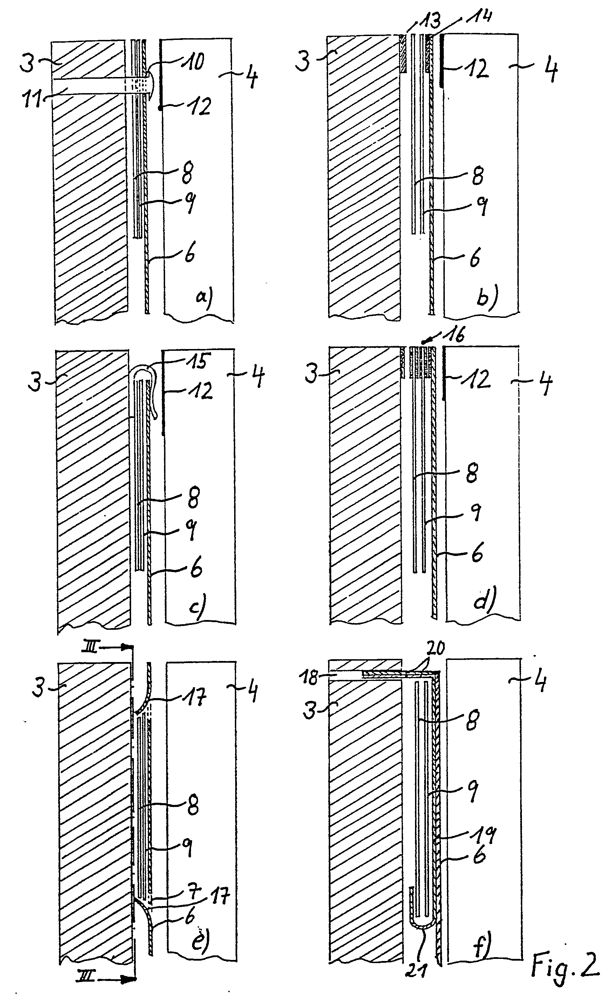

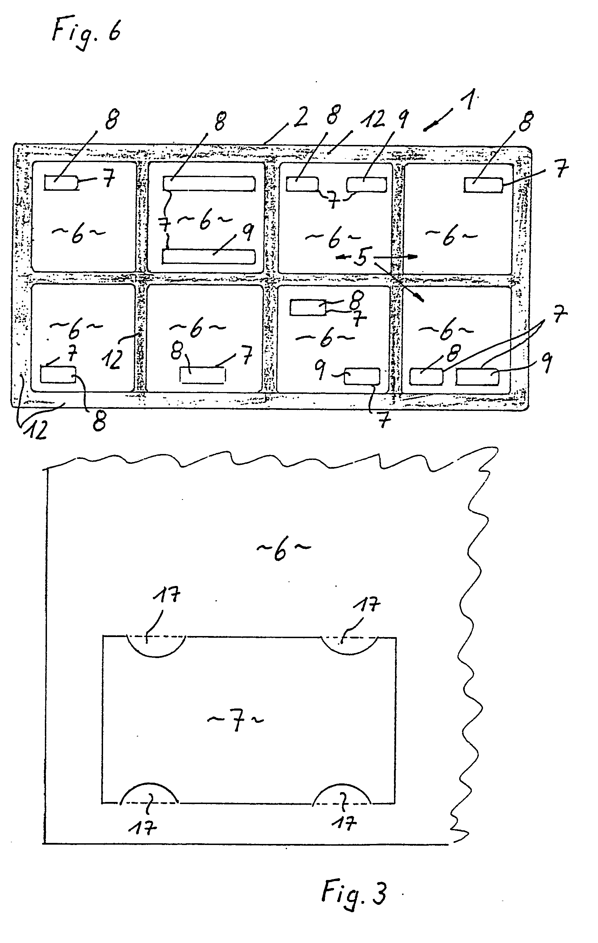

In der Zeichnung sind nur die zum unmittelbaren Verständnis der Erfindung notwendigen Elemente eines erfindungsgemäßen Leuchtkastens dargestellt sowie grundsätzlich gleichwirkende Teile mit gleichen Bezugsziffern versehen. Der in Fig. 1 ausschnittsweise schematisch veranschaulichte Leuchtkasten 1 besteht aus einem Außenrahmen 2 sowie einer von einer inneren Trägerscheibe 3 und einer äußeren Trägerscheibe 4 gebildeten Leuchtfläche 5. Das Diapositiv 6 ist zwischen der inneren Trägerscheibe 3 und der äußeren Trägerscheibe 4 angeordnet und in dem Ausführungsbeispiel nach Fig. 1 in seinem oberen Randbereich mit einer Aussparung 7 versehen, die das Sichtfenster zur Darstellung weiterer Transparentfolien 8 und 9 bildet. In dem gezeigten Ausführungsbeispiel weisen die Transparentfolie 8 eine DM-Preisangabe und die Transparentfolie 9 einen Pfennigbetrag aus. In der Aussparung 7 des Dispositivs 6 sind die Transparentfolien 8 übereinandergelegt in dem Sichtfenster 7 angeordnet, so daß im montierten Zustand die vollständige Preisangabe sichtbar ist. Das Dispositiv 6 sowie die Transparentfolien 8 und 9 sind mit Aufhänglochungen 10 versehen und auf an der inneren Trägerscheibe 3 angeordnete Halteniete 11 aufgehängt, so daß im Bedarfsfalls auf einfache Weise z. B. die den Pfennigbetrag ausweisende Trägerfolie 9 durch eine andere ersetzt werden kann. Durch die Halteniete 11 ist ein solcher Auswechselvorgang ohne eine zeitraubende Ausrichtungsarbeit der einzusetzenden Trägerfolie ermöglicht. Die Trägerfolien 8 und 9 sind insgesamt größer bemessen als die dispositivseitige Aussparung 7, um ein exaktes Anliegen der Folien sicherzustellen. Zur Vermeidung des Durchscheinens von Kanten der Folien 8 und 9 ist das Dispositiv 6 aus einem Opalfilm hergestellt, so daß die opalisierte Rückschicht dieses Films aufgrund seiner starken Streuwirkung die Folienkanten optisch verschwinden läßt. Um zu verhindern, daß die Halterung 11 und die Lochung 10 der Transparentvorlagen 8 und 9 sowie des Dispositivs 6 für den Betrachter erkennbar sind, ist die äußere Trägerscheibe 4 mit einem das Disapositiv 6 umrandenden Farbstriefen 12 als Abdeckung versehen. Diese Farbschicht ist zweckmäßigerweise dunkel ausgeführt und kann im Siebdruckverfahren auf die äußere Trägerscheibe aufgebracht werden.

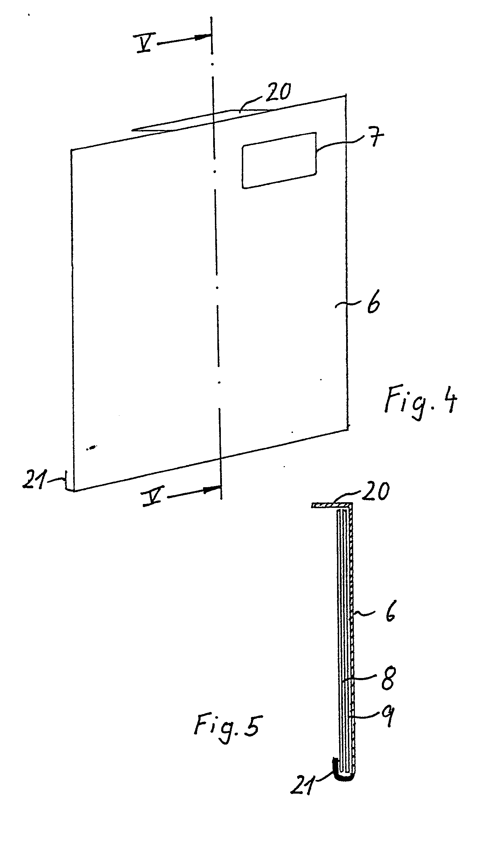

In den Darstellungen nach den Fig. 2a) bis f) sind mehrere Ausführungsbeispiele von Halterungen des Dispositives 6 und der Transparentvorlagen 8, 9 veranschaulicht. In dem Ausführungsbeispiel nach Fig. 2a) ist die Halterung in gleicher Weise wie bei dem in Fig. 1 dargestellten erfindungsgemäßen Leuchtkasten durch einen an der inneren Trägerscheibe 3 angeordneten Halteniet 11 gebildet, der in dem Dispositiv 6 sowie in den Sichtfolien 8 und 9 enthaltene Aufhänglochungen 10 durchgreift. Im Ausführungsbeispiel nach Fig. 2b) ist die Halterung magnetisch ausgebildet und die innere Trägerscheibe 3 mit einem oberseitig vorgesehenen Magnetstreifen 13 versehen, an dem das mit einer Metallfolie 14 innenseitig versehene Diapositiv 6 unter Festklemmung der Informationsträger 8 und 9 angelegt werden kann. In dem Ausführungsbeispiel nach Fig. 2c) ist an der inneren Trägerscheibe 3 eine Klemmleiste 15 vorgesehen, von der das Dispositiv 6 und die Transparentfolien 8 und 9 sicher und auswechselbar gehalten sind. In dem Ausführungsbeispiel nach Fig. 2d) wird die auswechselbare Halterung durch paarweise zusammenwirkende klettenartige Haftstreifen 16 gebildet, die an der inneren Trägerscheibe 3, dem Diapositiv 6 sowie den Tranparentfolien 8 und 9 vorgesehen sind. In dem Ausführungsbeispiel nach Fig. 2e) ist das Sichtfenster 7 durch eine im Diapositiv vorgesehene Aussparung 7 unter Belassung von Haltenasen 17 gebildet, wobei die wieteren Informationsträger 8 und 9, die beispielsweise auch als eine papierne Speisekarte ausgebildet sein können, von diesen Haltenasen 17 gehalten sind. In Fig. 3 ist in schematischer Vorderansicht dieses Ausführungsbeispiels nach Fig. 2e) die im Dispositiv 6 enthaltene Aussparung 7 unter Belassung der Haltenasen 17 näher veranschaulicht. Im Ausführungsbeispiel nach Fig. 2f) weist die innere Trägerscheibe 3 oberseitig einen Schlitz 18 auf, in den eine am Diapositiv 6 und an einer besonderen Trägerfolie 19 vorgesehene Falzung eingeführt ist. Die Falzung 20 kann sowohl durch oberseitiges Umknicken des Diapositivs 6 bzw. der Trägerfolie 19 als auch durch Aufkleben eines besonderen Haltesttreifens gebildet sein. Die Trägerfolie 19 bildet die Halterung für die Informationsträger 8 und 9 und ist im unteren Bereich mit einer Haltetasche 21 versehen, in die die Informationsträger 8 und 9 eingeführt sind. Alternativ zu der in diesem Ausführungsbeispiel vorgesehenen besonderen Trägerfolie 19 kann aber auch—wie in den Fig. 4 und 5 dargestellt—das Diapositiv 6 in seinem unteren Randbereich mit einer aufgeklebten Haltetasche versehen sein.

Fig. 6 zeigt in schematischer Vorderansicht einen Leuchtkasten 1 mit insgesamt acht Diapositiven 6, die an verschiedenen Stellen die Informationsangaben enthaltenen Transparentvorlagen aufweisen, und veranschaulicht die Variationsvielfalt der einfach und kostengünstig zu ändernden Darstellungsmöglichkeiten mittels des erfindungsgemäßen Leuchtkastens.

**Patentansprüche**

1. Leuchtkasten (1) für Transparentvorlagen, insbesondere Diapositive, mit zumindest einem vorderseitigen Paar transparenter Trägerscheiben (3, 4), die zwischen sich die Transparentvorlage (6) aufnehmen, sowie einer im Kasteninnern zur Belichtung der Transparentvorlage angeordneten Lichtquelle, dadurch gekennzeichnet, daß die Transparentvolage (6) ein oder mehrere Sichtfenster (7) aufweist, hinter dem oder denen eine oder mehrere weitere Informationen tragende Transparentvorlagen (8, 9) auswechselbar angeordnet sind und zumindest eine der Trägerscheiben (3, 4) mit einer von außen nicht sichtbaren Halterung (11, 13, 14, 15) für zumindest die weiteren Transparentvorlagen (8, 9) versehen ist.

2. Leuchtkasten nach Anspruch 1, dadurch gekennzeichnet, daß das Sichtfenster (7) durch eine in der Transparentvorlage (6) vorgesehene Aussparung gebildet ist.

3. Leuchtkasten nach Anspruch 1, dadurch gekennzeichnet, daß das Sichtfenster (7) durch eine durchsichtige Fläche in der Transparentvorlage (6) gebildet ist.

4. Leuchtkasten nach einem der Ansprüche 1 bis 3, dadurch gekennzeichnet, daß die Halterung aus zwei oder mehreren, an der inneren Trägerscheibe (3) vorgesehenen Nieten oder Haken (11) besteht und die Transparentvorlage (6; 8, 9) mit Aufhänglochungen (10) versehen sind.

5. Leuchtkasten nach einem der Ansprüche 1 bis 3, dadurch gekennzeichnet, daß die Halterung durch eine an der inneren Trägerscheibe (3) vorgesehene Klemmleiste (15) gebildet ist.

6. Leuchtkasten nach einem der Ansprüche 1 bis 3, dadurch gekennzeichnet, daß die Halterung durch einen klettenartigen Haftverschluß (16) gebildet ist und die innere Trägerscheibe (3) sowie die Transparentvorlage (6) und die weiteren Transparentvorlagen (8, 9) klettenartige Haftstreifen aufweisen.

7. Leuchtkasten nach einem der Ansprüche 1 bis 3, dadurch gekennzeichnet, daß die Halterung magnetisch ausgebildet ist und die innere Trägerscheibe (3) sowie die Transparentvorlage (6) und/oder die weiteren Transparentvorlagen (8, 9) paarweise zusammenwirkende Magnet-Metallhaftungsteile (13, 14) aufweisen.

8. Leuchtkasten nach Anspruch 7, dadurch gekennzeichnet, daß zur magnetischen Halterung die innere Trägerscheibe (3) an ihrem oberseitigen Randbereich mit einem Magnetstreifen (13) versehen ist und die Transparentvorlage (6) eine Metallfolie (14) aufweist.

9. Leuchtkasten nach einem der Ansprüche 1 bis 3, dadurch gekennzeichnet, daß zur Halterung die innere Trägerscheibe (3) eine Aufnahmeöffnung (18) hat, in die eine oberseitig an der Transparentvorlage (6) oder an einer besonderen Trägerfolie (19) vorgesehene Falzung (20) einsteckbar ist, und die Transparentvorlage (6) oder die besondere Trägerfolie (19) eine Haltetasche (21) zur Aufnahme der weiteren Transparentvorlagen (8, 9) aufweist.

10. Leuchtkasten nach Anspruch 9, dadurch gekennzeichnet, daß die Falzung (20) und die Haltetasche (21) durch randseitiges Umknicken der Transparentvorlage (6) oder der Trägerfolie (19) gebildet sind.

11. Leuchtkasten nach Anspruch 9, dadurch gekennzeichnet, daß die Transparentvorlage (6) oder die besondere Trägerfolie (19) mit aufgeklebten, durchsichtigen Haltern versehen sind, die die Falzung (20) und die Haltetasche (21) bilden.

12. Leuchtkasten nach Anspruch 1 oder 9, dadurch gekennzeichnet, daß zur Halterung der weiteren Transparentvorlagen (8, 9) an der Transparentvorlage (6) oder an der besonderen Trägerfolie (19) angeordnete Haltenasen (17) vorgesehen sind.

13. Leuchtkasten nach Anspruch 12, dadurch gekennzeichnet, daß die Haltenasen (17) durch in den Sichtfensterbereich vorstehende Ausstanzungen der Transparentvorlage (6) gebildet sind.

14. Leuchtkasten nach einem der Ansprüche 1 bis 13, dadurch gekennzeichnet, daß die äußere Trägerscheibe (4) in einem die Halterung (11, 13, 14, 15, 16) überlappenden Bereich mit einer Abdeckung (12) versehen ist.

15. Leuchtkasten nach Anspruch 14, dadurch gekennzeichnet, daß die Abdeckung durch eine drucktechnisch erzeugte Farbbahn gebildet ist.

16. Leuchtkasten nach einem der Ansprüche 1 bis 15, dadurch gekennzeichnet, daß die Transparentvorlage (6) durch einen Opalfilm gebildet ist und die weiteren Transparentvorlagen (8, 9) größere Abmessungen haben als das in der Transparentvorlage (6) vorgesehene Sichtfenster (7).

17. Leuchtkasten nach einem der Ansprüche 1 bis 16, dadurch gekennzeichnet, daß die weiteren Transparentvorlagen (8, 9) jeweils eine Teilinformation enthalten, die sich durch eine gemeinsame Anordnung der weiteren Transparentvorlagen (8, 9) in dem Sichtfenster zu der vollständigen Information zusammensetzen.

**Revendications**

1. Visionneuse lumineuse (1) pour supports transparents, en particulier des diapositives, munie d'au moins une paire de lames de support transparentes avant (3, 4) qui reçoivent entre elles le support transparent (6), ainsi que d'une source lumineuse prévue à l'intérieur de la visionneuse pour éclairer le support transparent, caractérisée en ce que le support transparent (6) présente une ou plusieurs fenêtres (7), derrière laquelle ou lesquelles sont disposés, de manière interchangeable, un ou plusieurs supports transparents (8, 9) supplémentaires porteurs d'informations et au moins une des lames de support (3, 4) est munie d'une fixation (11, 13, 14, 15) non visible de l'extérieur pour au moins les supports transparents supplémentaires (8, 9).

2. Visionneuse lumineuse suivant la revendication 1, caractérisée en ce que la fenêtre (7) est constituée par une ouverture prévue dans le support transparent (6).

3. Visionneuse lumineuse suivant la revendication 1, caractérisée en ce que la fenêtre (7) est constituée par une surface transparente dans le support transparent (6).

4. Visionneuse lumineuse suivant l'une quelconque des revendications 1 à 3, caractérisée en ce que la fixation est constituée par deux ou plusieurs rivets ou crochets (11) prévus sur la lame de support intérieure (3), et les supports transparents (6, 8, 9) sont pourvus de trous de suspension (10).

5. Visionneuse lumineuse suivant l'une quelconque des revendications 1 à 3, caractérisée en ce que la fixation est constituée par une languette de serrage (15) prévue sur la lame de support intérieure (3).

6. Visionneuse lumineuse suivant l'une quelconque des revendications 1 à 3, caractérisée en ce que la fixation est constituée par une fermeture adhésive (16) du type autoagrippant, et la lame de support intérieure (3) ainsi que le support transparent (6) et les supports transparents supplémentaires (8, 9) présentent des bandes adhésives du type autoagrippant.

7. Visionneuse lumineuse suivant l'une quelconque des revendications 1 à 3, caractérisée en ce que la fixation est de type magnétique, et la lame de support intérieure (3) ainsi que le support transparent (6) et/ou les supports transparents supplémentaires (8, 9) présentent des parties d'attaches métalliques magnétiques (13, 14) coopérant par paires.

8. Visionneuse lumineuse suivant la revendication 7, caractérisée en ce que, pour réaliser la fixation magnétique, la lame de support intérieure (3) est pourvue, sur sa zone périphérique supérieure, d'une bande magnétique (13) et le support transparent (6) présente une feuille métallique (14).

9. Visionneuse lumineuse suivant l'une quelconque des revendications 1 à 3, caractérisée en ce que, pour réaliser la fixation, la lame de support intérieure (3) comprend un passage d'introduction (18), dans lequel on peut introduire une pliure (20) prévue en haut du support transparent (6) ou sur une feuille de support particulière (19), et le support transparent (6) ou la feuille de support particulière (19) présente un poche de soutien (21) pour recevoir les supports transparents supplémentaires.

10. Visionneuse lumineuse suivant la revendication 9, caractérisée en ce que la pliure (20) et la poche de soutien (21) sont constituées en repliant le bord du support transparent (6) ou de la feuille de support (19).

11. Visionneuse lumineuse suivant la revendication 9, caractérisée en ce que le support transparent (6) ou la feuille de support particulière (19) sont pourvus de fixations transparentes collées formant la pliure (20) et la poche de soutien (21).

12. Visionneuse lumineuse suivant la revendication 1 ou 9, caractérisée en ce que, pour réaliser la fixation des supports transparents supplémentaires (8, 9), des becs de soutien (17) sont prévus sur le support transparent (6) ou sur la feuille de support particulière (19).

13. Visionneuse lumineuse suivant la revendication 12, caractérisée en ce que les becs de soutien (17) sont constitués par des découpes du support transparent (6) situées dans la zone des fenêtres.

14. Visionneuse lumineuse suivant l'une quelconque des revendications 1 à 13, caractérisée en ce que la lame de support extérieure (4) est pourvue d'une ouverture (12) dans une zone chevauchant la fixation (11, 13, 14, 15, 16).

15. Visionneuse lumineuse suivant la revendication 14, caractérisée en ce que la couverture est constituée par une bande de couleur produite par sérigraphie.

16. Visionneuse lumineuse suivant l'une quelconque des revendications 1 à 15, caractérisée en ce que le support transparent (6) est formé d'une pellicule opale et les supports transparents supplémentaires (8, 9) sont de dimensions supérieures à celles de la fenêtre (7) prévue dans le support transparent (6).

17. Visionneuse lumineuse suivant l'une quelconque des revendications 1 à 16, caractérisée en ce que les supports transparents supplémentaires (8, 9) contiennent chacun une information partielle permettant, par un agencement commun des supports transparents supplémentaires (8, 9) dans la fenêtre, de composer l'information complète.

## Claims

1. A light box (1) for translucent originals, particularly transparencies, having at least one pair of transparent supporting plates (3, 4) at the front which receive the translucent original (6) between them, as well as a light source disposed in the interior of the box to illuminate the translucent original, characterised in that the translucent original (6) has one or more viewing windows (7) behind which one or more further translucent originals (8, 9) carrying information are interchangeably arranged, and at least one of the supporting plates (3, 4) is provided with a holding means (11, 13, 14, 15), not visible from the outside, for at least the further translucent originals (8, 9).

2. A light box according to Claim 1, characterised in that the viewing window (7) is formed by an opening provided in the translucent original (6).

3. A light box according to Claim 1, characterized in that the viewing window (7) is formed by a transparent area in the translucent original (6).

4. A light box according to any one of Claims 1 to 3, characterised in that the holding means consists of two or more rivets or hooks (11) provided on the inner supporting plate (3) and the translucent originals (6, 8, 9) are provided with suspension perforations (10).

5. A light box according to any one of Claims 1 to 3, characterised in that the holding means is formed by a clip strip (15) provided on the inner supporting plate (3).

6. A light box according to any one of Claims 1 to 3, characterised in that the holding means is formed by a self-gripping type fastener (16) and the inner supporting plate (3) as well as the translucent original (6) and the further translucent originals (8, 9) have self-gripping type adhesive strips.

7. A light box according to any one of Claims 1 to 3, characterised in that the holding means is of magnetic construction and the inner supporting plate (3) as well as the translucent original (6) and/ or the further translucent originals (8, 9) have magnet-metal adhesion members (13, 14) cooperating in pairs.

8. A light box according to Claim 7, characterised in that, for the magnetic holding means, the inner supporting plate (3) is provided at its upper marginal region with a magnetic strip (13) and the translucent original (6) comprises a metal foil (14).

9. A light box according to any one of Claims 1 to 3, characterised in that, for the holding means, the inner supporting plate (3) has a receiving opening (18) in which there can be inserted a fold (20) provided at the top on the translucent original (6) or on a separate supporting film (19), and the translucent original (6) or the separate supporting film (19) comprises a holding pocket (21) to receive the further translucent originals (8, 9).

10. A light box according to Claim 9, characterised in that the fold (20) and the holding pocket (21) are formed by bending over the margin of the translucent original (6) or of the supporting film (19).

11. A light box according to Claim 9, characterised in that the translucent original (6) or the separate supporting film (19) is provided with transparent holders which are attached by adhesion and form the fold (20) and the holding pocket (21).

12. A light box according to Claim 1 or 9, characterised in that retaining projections (17) disposed on the translucent original (6) or on the separate supporting film (19) are provided to hold the further translucent originals (8, 9).

13. A light box according to Claim 12, characterised in that the retaining projections (17) are formed by punched-out portions of the translucent original (6) which project into the viewing window region.

14. A light box according to any one of Claims 1 to 13, characterised in that the outer supporting plate (4) is provided with a cover (12) in a region overlapping the holding means (11, 13, 14, 15, 16).

15. A light box according to Claim 14, characterised in that the cover is formed by a coloured track produced by a printing technique.

16. A light box according to any one of Claims 1 to 15, characterised in that the translucent original (6) is formed by an opal film and the further translucent originals (8, 9) have larger dimensions than the viewing window (7) provided in the translucent original (6).

17. A light box according to any one of Claims 1 to 16, characterised in that the further translucent originals (8, 9) each contain partial information which is combined to form the complete information by a joint arrangement of the further translucent originals (8, 9) in the viewing window.

Fig. 1

Fig.2

Fig. 6

Fig. 3

3

$\overline{V}$

20

7

6

Fig. 4

21

$\overline{V}$

20

6

8

9

Fig. 5

21